# FASCICULE DE BREVET EUROPEEN

(11) **EP 3 551 859 B1**
(45) Date de publication et mention de la délivrance du brevet: **15.12.2021**
(21) Numéro de dépôt: 17709663.3
(22) Date de dépôt: 08.03.2017
(51) Int. Cl.: F01N 5/02, F01N 3/02

(54) **DISPOSITIF DE RÉCUPÉRATION DE CHALEUR À L'ÉCHAPPEMENT À ÉTANCHÉITÉ AMÉLIORÉE**
VORRICHTUNG ZUR ABWÄRMERÜCKGEWINNUNG MIT VERBESSERTER ABDICHTUNG
EXHAUST HEAT RECUPERATION DEVICE WITH IMPROVED SEALING

(30) Priorité: 09.12.2016 FR 1662229
(43) Date de publication de la demande: 16.10.2019
(73) Titulaire: Faurecia Systèmes d'Echappement, 92000 Nanterre (FR)
(72) Inventeur: GREBER, Frédéric, 25150 Ecot (FR); OH, Yong-Hwan, Ansan City (KR); HOSSFELD, Christoph, 86707 Westendorf (DE)
(74) Mandataire: Lavoix
(86) Numéro de dépôt international: PCT/EP2017/055492
(87) Numéro de publication internationale: WO 2018/103898

(56) Documents cités:
- EP-A1- 1 443 186
- EP-A1- 1 852 585
- EP-A1- 2 781 730
- EP-A2- 1 512 851
- FR-A1- 2 854 103
- JP-A- 2016 044 666

## Description

La présente invention concerne un dispositif de récupération de chaleur à l'échappement, notamment pour un véhicule automobile.

L'énergie thermique contenue dans les gaz d'échappement représente environ 30% de l'énergie contenue dans le carburant. Un dispositif de récupération de chaleur est destiné à transférer cette énergie vers un autre fluide, tel qu'un liquide de refroidissement ou de l'huile moteur.

On connait déjà dans l'état de la technique, notamment d'après FR 3 031 140, un dispositif de récupération de chaleur pour ligne d'échappement, s'étendant entre une entrée et une sortie de gaz d'échappement, et comportant :
- une vanne délimitant un passage de gaz vers la sortie de gaz d'échappement, logeant un clapet mobile autour d'une liaison pivot entre une position d'obturation et une position de libération du passage, et
- un échangeur thermique comprenant une entrée d'échangeur communiquant avec la vanne en amont du clapet, et une sortie d'échangeur communiquant avec la vanne en aval du clapet.

L'échangeur thermique est destiné à permettre l'échange de chaleur entre les gaz d'échappement, passant par cet échangeur thermique, et un fluide caloporteur, notamment un liquide de refroidissement.

Lorsque le clapet est en position d'obturation, la circulation des gaz d'échappement est forcée depuis l'entrée vers la sortie de gaz à travers l'échangeur thermique. Lorsque le clapet est en position de libération, les gaz d'échappement circulent à travers le passage délimité par la vanne, l'échangeur étant alors inactif.

Dans un tel dispositif, le clapet vient en appui contre un siège formé par une coupelle plate agencée dans la vanne.

Une telle coupelle est soudée dans la vanne, si bien qu'il existe un risque que cette coupelle se déforme sous l'effet de la chaleur dégagée par la soudure. Dans ce cas, l'étanchéité entre la coupelle et le clapet en position d'obturation est parfois incorrectement assurée.

On connait également dans l'état de la technique, notamment d'après JP 2016 044 666 A, un dispositif de récupération de chaleur dans lequel le siège pour le clapet est porté par une coupelle conique, le clapet présentant alors une forme conique complémentaire. La coupelle conique est également soudée dans la vanne.

L'étanchéité est également difficile à assurer dans ce dispositif, car la coupelle conique risque également d'être déformée lors de son soudage dans la vanne, et la forme du clapet est difficile à obtenir, cette forme pouvant également être sujette à des déformations lors de la conception du clapet. Or, toute déformation de la coupelle ou du clapet modifie la position relative de la coupelle et de ce clapet, entraînant alors des fuites.

L'invention a notamment pour but de remédier à ces inconvénients, en proposant un dispositif de récupération de chaleur dont l'étanchéité est améliorée.

A cet effet, l'invention a notamment pour objet un dispositif de récupération de chaleur à l'échappement selon la revendication 1.

Conformément à l'invention, le bord d'embouchure du tube est plan, et le clapet est plan, de manière à obtenir un contact plan/plan, pour lequel l'étanchéité est aisément maîtrisable.

Le bord d'embouchure est généralement obtenu par découpe du tube, notamment découpe laser. Toute déformation éventuelle de ce tube, lors de son assemblage dans la vanne, ne modifie pas la planéité du bord d'embouchure.

Ainsi, les effets des multiples soudures nécessaires au montage du dispositif de récupération n'affectent que marginalement l'étanchéité.

En outre, le clapet de forme plane est aisé à concevoir, si bien que les risques de déformation du clapet lors de sa conception sont très limités.

Un dispositif de récupération de chaleur selon l'invention peut comporter en outre l'une ou plusieurs des caractéristiques suivantes, prises seules ou selon toutes combinaisons techniquement envisageables.
- Le tube s'étend le long d'un axe longitudinal, le bord d'embouchure s'étendant dans un plan formant un angle compris entre 60° et 90° avec l'axe longitudinal, par exemple un angle égal à 60° ou égal à 90°.
- Le tube présente une section transversale oblongue.
- La liaison pivot portant le clapet est formée par deux demi-articulations alignées, disposées de part et d'autre du tube, la liaison pivot présentant un axe passant par le tube.
- Le clapet comporte un tricot métallique, destiné à venir en contact avec le bord d'embouchure du tube.
- Le clapet comporte une masselotte.
- La masselotte est conformée pour obstruer la sortie d'échangeur lorsque le clapet est en position de libération, la sortie d'échangeur étant de préférence munie d'une bague ajustée réduisant l'espace disponible au gaz à la sortie d'échangeur lorsque le clapet est en position de libération.
- La masselotte présente une forme recourbée, conformée pour obstruer la sortie d'échangeur lorsque le clapet est dans une position intermédiaire prédéfinie entre la position d'obturation et la position de libération.

L'invention concerne également un procédé de fabrication d'un dispositif de récupération tel que défini précédemment, caractérisé en ce qu'il comporte :
- la fourniture du tube,
- le montage d'un support de clapet sur le tube,
- l'assemblage du clapet sur le support de clapet, la liaison pivot étant montée avec un jeu,
- le positionnement du clapet en position d'obturation, en contact direct avec le bord d'embouchure, et
- la fixation de la position de la liaison pivot par rapport au support de clapet, compte tenu du positionnement du clapet en position d'obturation.

L'invention sera mieux comprise à la lecture de la description qui va suivre, donnée uniquement à titre d'exemple et faite en se référant aux figures annexées, parmi lesquelles :
- Les figures 1 et 2 sont des vues en coupe longitudinale d'un dispositif de récupération de chaleur selon un exemple de mode de réalisation de l'invention, comprenant un clapet respectivement en position d'obturation et en position de libération ;
- La figure 3 est une vue en coupe transversale du dispositif de récupération de la figure 1, dans un plan comportant une liaison pivot portant le clapet ;
- La figure 4 est une vue dans le même plan de coupe que les figures 1 et 2, d'un conduit intermédiaire du dispositif de récupération de ces figures 1 et 2, selon une variante de réalisation.

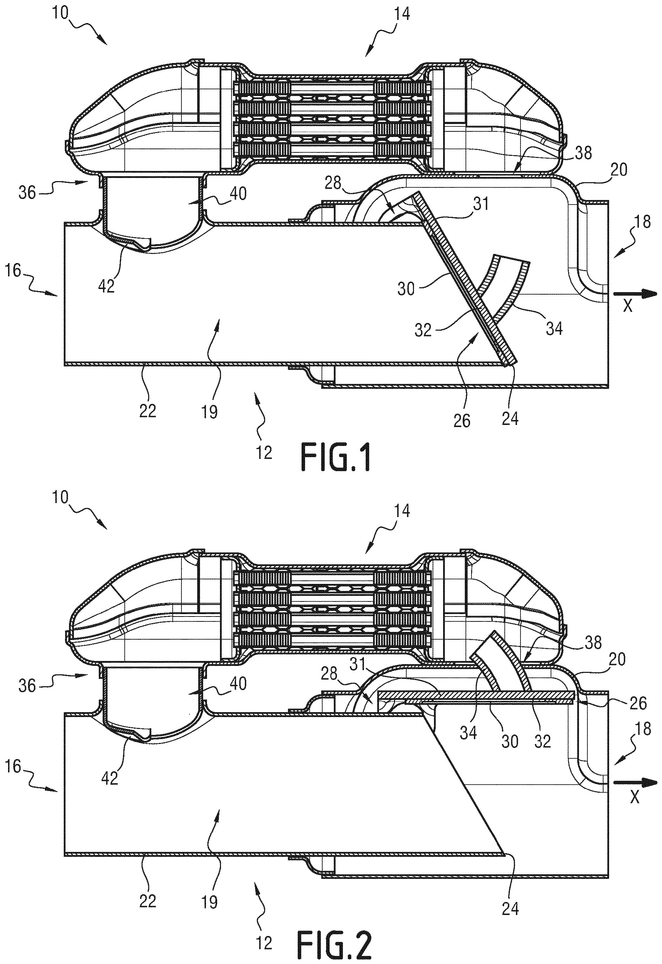

On a représenté, sur les figures 1 et 2, un dispositif 10 de récupération de chaleur, destiné à être intercalé dans une ligne d'échappement d'un véhicule, typiquement un véhicule automobile, par exemple une voiture ou un camion.

Le dispositif de récupération 10 est destiné à récupérer une partie de l'énergie thermique des gaz d'échappement, pour la transférer à un fluide caloporteur, par exemple à un liquide de refroidissement du moteur, ou à un circuit de chauffage de l'habitacle.

Le dispositif de récupération 10 comporte une vanne 12 et un échangeur de chaleur 14, agencés en parallèle.

La vanne 12 présente une entrée 16 de gaz d'échappement, et une sortie 18 de gaz d'échappement. La vanne 12 délimite intérieurement un passage direct 19 pour les gaz d'échappement, depuis l'entrée 16 jusqu'à la sortie 18.

La vanne 12 comporte un corps de vanne 20 comportant la sortie 18, et un tube 22 s'étendant en partie dans le corps de vanne 20, et comprenant l'entrée 16.

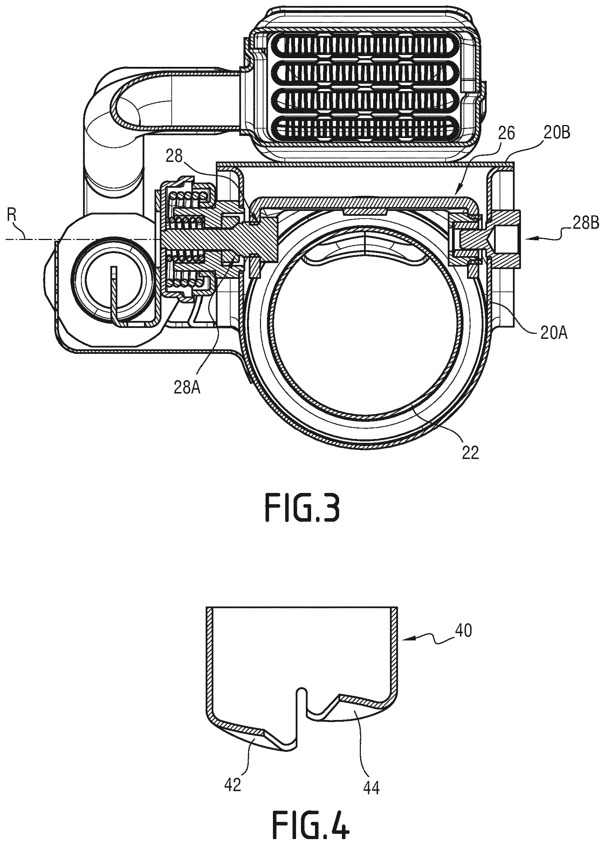

Le corps de vanne 20 est par exemple formé de deux éléments, qui sont une demi-coquille inférieure 20A et une demi-coquille supérieure 20B (notamment représentées sur la figure 3). Ces demi-coquilles inférieure 20A et supérieure 20B comportent chacune un contour plat, ces demi-coquilles 20A, 20B étant assemblées entre elles par la superposition de ces contours plats. Une soudure « plat sur plat » permet de réaliser leur assemblage de manière classique.

Dans l'exemple décrit, le tube 22 présente une section transversale circulaire. Toutefois, en variante, le tube 22 présente une section transversale oblongue. Un tube oblong permet de réduire la hauteur du dispositif 10. Un tel tube oblong peut être obtenu par l'assemblage de deux demi-tubes coupés dans le sens de la longueur, ou par un procédé d'hydroformage à partir d'un tube à section circulaire.

Le tube 22 comporte un bord d'embouchure 24 d'extrémité distale, agencé dans le corps de vanne 20. Ce bord d'embouchure 24 est à l'extrémité de la partie du tube 22 s'étendant dans le corps de vanne 20.

Le bord d'embouchure 24 s'étend intégralement dans un plan. Par exemple, ce plan est incliné par rapport à une direction longitudinale X, le long de laquelle s'étend le tube 22, d'un angle avantageusement compris entre 60 et 90°.

La vanne 12 comporte par ailleurs un clapet 26, mobile autour d'une liaison pivot 28 entre une position d'obturation (représentée sur la figure 1) et une position de libération (représentée sur la figure 2) du passage 19. La liaison pivot 28 est portée par un élément de support rapporté.

Comme cela est représenté sur la figure 3, la liaison pivot 28 est par exemple formée par deux demi-articulations 28A, 28B alignées, disposées de part et d'autre du tube 22, la liaison pivot 28 présentant un axe R passant par le tube 22. Cette disposition de la liaison pivot 28 permet de réduire la hauteur du corps de vanne 20.

Les demi-articulations 28A, 28B sont chacune portée par le corps de vanne 20, et plus particulièrement par la demi coquille inférieure 20A.

Avantageusement, la liaison pivot 28 est légèrement déportée vers l'entrée 16 par rapport au bord d'extrémité 24, le clapet 26 étant alors décalé par rapport à l'axe R.

Ainsi, pour un même angle d'ouverture, l'ouverture entre le clapet 26 et le bord d'embouchure 24 est plus grande lorsque la liaison pivot 28 est déportée que dans le cas d'une liaison pivot agencée dans le plan du bord d'embouchure 24. En outre, le clapet 26 muni d'une telle liaison pivot 28 déportée est moins sensible aux pulsations des gaz d'échappement qu'un clapet dont la liaison pivot est agencée dans le plan du bord d'embouchure 24.

Le clapet 26 présente une surface de contact 30 plane, destinée à venir en contact direct avec le bord d'embouchure 24 du tube 22 lorsque le clapet 26 est en position d'obturation. Par « contact direct », on entend que le clapet repose directement sur le bord d'embouchure 24, sans que ce bord d'embouchure 24 ne porte un élément supplémentaire intermédiaire.

Le clapet 26 est actionné de manière classique au moyen d'un levier, solidaire de ce clapet 26, le levier étant déplacé par des moyens d'actionnement classiques, par exemple à cire ou électriques.

Il est à noter que l'angle entre le plan du bord d'embouchure 24 et la direction longitudinale X est préférentiellement sensiblement égal à 60° lorsque le dispositif comporte des moyens d'actionnement à cire, et préférentiellement sensiblement égal à 90° lorsque le dispositif comporte des moyens d'actionnement électriques.

Un angle de 90° est par ailleurs avantageux en ce qu'il ne nécessite pas d'apporter une attention particulière à la position angulaire du tube 22 lors de l'assemblage du dispositif 10.

Le clapet 26 permet un appui surfacique sur toute la surface formée par le bord d'embouchure 24, en périphérie du tube 22, ce qui permet de garantir la géométrie de la surface d'appui. En effet celle-ci n'est pas ou très peu sensible aux déformations occasionnées lors de l'assemblage par soudage. Avantageusement, le tube 22 présente une épaisseur sensiblement égale à 2mm, afin de présenter une surface d'appui importante.

Le clapet 26 comporte un élément structurel plan 31, porté par la liaison pivot 28. Comme indiqué précédemment, la liaison pivot 28 est déportée par rapport à cet élément structurel plan 31. En d'autres termes, l'axe R ne passe pas par cet élément structurel plan 31.

Avantageusement, le clapet 26 comporte un élément d'amortissement 32, par exemple un tricot métallique 32, destiné à venir en contact avec le bord d'embouchure 24 du tube 22. Ainsi, dans ce cas, l'élément d'amortissement 32 porte la surface de contact plane 30. Un tel tricot métallique 32 est assemblé par soudage par points à l'élément structurel 31.

L'élément d'amortissement 32 est destiné à limiter le bruit dû au choc entre le clapet 26 et le bord d'embouchure 24 lorsque le clapet 26 passe en position d'obturation. L'élément d'amortissement 32, notamment lorsqu'il est formé par un tricot métallique, peut être une légère source de fuites entre le tube 22 et le corps de vanne 20, mais de telles fuites sont très limitées, et négligeables. De telles fuites sont notamment très inférieures aux fuites observées dans les dispositifs de l'état de la technique.

Avantageusement, le clapet 26 comporte par ailleurs une masselotte 34, portée par l'élément structurel 31, à l'opposé de la surface de contact 30. Cette masselotte 34 permet d'augmenter la masse du clapet 26, et ainsi de réduire la fréquence propre du clapet 26, diminuant alors sa sensibilité aux pulsations des gaz d'échappement, et réduisant donc les vibrations du clapet 26.

L'échangeur thermique 14 comprend une entrée d'échangeur 36 communiquant avec la vanne 12 en amont du clapet 26, et une sortie d'échangeur 38 communiquant avec la vanne 12 en aval du clapet 26. Ainsi, l'entrée d'échangeur 36 communique avec le tube 22, et la sortie d'échangeur 38 communique avec le corps de vanne 20.

Avantageusement, la masselotte 34 du clapet 26 est conformée pour obturer la sortie d'échangeur 38 lorsque le clapet 26 est en position de libération.

Par exemple, la masselotte 34 présente une forme générale courbe s'étendant en saillie depuis l'élément structurel 31. Ainsi, la masselotte 34 vient obturer la sortie d'échangeur 38 dès une position intermédiaire du clapet 26 entre la position d'obturation et la position de libération. La sortie d'échangeur 38 est donc dans ce cas obturée même lorsque la course du clapet 26 n'est pas complète, par exemple lorsque le dispositif comporte des moyens d'actionnement à cire.

La masselotte 34 est par exemple conformée pour commencer à obturer la sortie d'échangeur 38 dès un angle d'ouverture du clapet de 28°. En effet, des moyens d'actionnement à cire vieillissent en fonction du nombre d'actionnement, si bien qu'alors qu'à neuf l'angle d'ouverture est de 38°, cet angle d'ouverture n'est plus que de 28° en fin de vie.

Ainsi, lorsque que la température de transition est atteinte dans le circuit de liquide de refroidissement, la masselotte arquée 34 du clapet 26 vient s'insérer dans l'ouverture de sortie d'échangeur 38. Avantageusement, cette sortie d'échangeur 38 est munie d'une bague ajustée réduisant l'espace disponible au gaz à la sortie d'échangeur 38 lors de l'ouverture du clapet 26. Ainsi, la sortie d'échangeur 38 étant presque totalement obturée, les gaz passent nécessairement au travers du tube 22 et du corps de vanne 20 en évitant l'échangeur 14.

Dans l'exemple décrit, le dispositif de récupération 10 comporte un conduit intermédiaire 40 s'étendant entre le tube 22 et l'entrée d'échangeur 36. Ce conduit intermédiaire 40 s'étend transversalement par rapport à la direction longitudinale X.

Avantageusement, le dispositif de récupération 10 comprend, en entrée du conduit intermédiaire 40, un déflecteur amont 42 propre à guide le gaz provenant de l'entrée de gaz 16 vers le passage 19. Ce déflecteur amont 42 permet d'assurer que le gaz provenant de l'entrée de gaz 16 passe par le passage 19 lorsque le clapet 26 est en position de libération.

Par exemple, le déflecteur amont 42 est formé par une partie du conduit intermédiaire 40, s'étendant dans le tube 22, par déformation d'une sur-longueur de ce conduit intermédiaire 40.

Avantageusement, le déflecteur amont 42 s'étend dans le tube 22 jusqu'à une hauteur comprise entre 2 et 10 mm.

Conformément à une variante représentée sur la figure 4, le dispositif de récupération 10 comporte un déflecteur aval 44, agencé dans le tube 22 en aval de l'entrée du conduit intermédiaire 40, donc en aval du déflecteur amont 42. Ce déflecteur aval 44 diminue encore le flux de gaz passant par l'échangeur 14 lorsque le clapet 26 est en position de libération, en limitant la section de l'ouverture vers le conduit intermédiaire 40. Ce déflecteur aval 44 limite également la création de vortex en aval du déflecteur amont 42, diminuant ainsi le débit des gaz en direction de l'échangeur 14.

Avantageusement, le déflecteur amont 42 s'avance dans le tube 22 sur une hauteur supérieure à celle du déflecteur aval 44. En d'autres termes, le déflecteur amont 42 est plus proche du centre du tube 22 que le déflecteur aval 44. Ainsi, le gaz dévié par le déflecteur amont 42 n'est pas dévié par le déflecteur aval 44 vers le conduit intermédiaire 40.

Par exemple, le déflecteur aval 44 s'étend dans le tube 22 jusqu'à une hauteur comprise entre 2 et 5 mm.

Conformément à une variante, le déflecteur amont 42 et/ou le déflecteur aval 44 est venu de matière avec le tube 22, et obtenu par une déformation de ce tube 22.

Conformément à une autre variante, le déflecteur amont 42 et/ou le déflecteur aval 44 est formé par une pièce rapportée entre le tube 22 et le conduit intermédiaire 40.

Le fonctionnement du dispositif de récupération de chaleur 10 selon l'invention va maintenant être décrit.

Le dispositif de récupération 10 fonctionne selon deux modes de fonctionnement, qui sont un mode de récupération d'énergie, et un mode de court-circuit.

Le dispositif de récupération 10 est en mode de récupération d'énergie lorsque la température du liquide de refroidissement est en dessous d'un seuil de déclenchement des moyens d'actionnement. Le clapet 26 est alors en position d'obturation, en appui sur le bord d'embouchure 24 du tube 22. Le clapet 26 obture ainsi le passage des gaz d'échappement à l'extrémité du tube 22. Les gaz d'échappement provenant de l'entrée de gaz 16 sont alors dirigés dans un premier temps au travers du conduit intermédiaire 40 puis dans l'entrée gaz 36 de l'échangeur 14. Les gaz d'échappement traversent l'échangeur 14 puis le corps de vanne 20, vers la sortie de gaz 18.

Le dispositif de récupération 10 est en mode de court-circuit lorsque le liquide de refroidissement atteint la température de transition des moyens d'actionnement. Les moyens d'actionnement mettent alors en rotation la liaison pivot 28 et par conséquent le clapet 26. Les gaz d'échappements qui arrivent à l'entrée de gaz 16 traversent le passage direct 19 vers le corps de vanne 20, à travers l'ouverture libérée entre le clapet 26 et le bord 24.

La masselotte 34 du clapet 26 vient alors obturer la sortie d'échangeur 38.

Comme indiqué précédemment, le déflecteur amont 42 permet de limiter le passage d'une partie des gaz dans l'échangeur 14, en déviant le flux de gaz vers la partie inférieure du tube 22. Ainsi, les gaz ont tendance naturellement à suivre le tube 22. En outre, la sortie d'échangeur 38 étant sensiblement obturée, le passage de gaz par l'échangeur 14 est quasiment bloqué.

Plus particulièrement, lorsque la sortie d'échangeur 38 est sensiblement obturée, le débit de gaz passant par l'échangeur est inférieur à 1% du débit de gaz passant par le tube 22.

A titre d'exemple, la section de passage des gaz d'échappement étant de 60 mm², le débit passant par l'échangeur n'est que de 2,4 kg/h à 800°C, rapporté à un débit de 416 kg/h passant au travers du tube 22. Il est à noter qu'en l'absence des déflecteurs 42 et 44 de la bague ajustée, ce débit serait de 9,7 kg/h.

Un procédé de fabrication du dispositif de récupération 10 va maintenant être décrit.

Ce procédé doit assurer le contact plan/plan du clapet 26 en position d'obturation avec le bord d'embouchure 24.

Ainsi, le procédé comporte une étape de fourniture du tube 22, dont le bord d'embouchure 24 a préalablement été formé, par exemple par découpage du tube 22, notamment découpage laser. Ainsi, le bord d'embouchure 24 est défini dans un plan, formant un angle prédéfini avec la direction longitudinale X, par exemple 60° ou 90°.

Le procédé comporte ensuite une étape de montage d'un support de clapet sur le tube 22. Dans l'exemple décrit, le support de clapet est formé par un palier rapporté et soudé sur le corps de vanne 20.

Le procédé comporte ensuite l'assemblage du clapet 26 sur le support de clapet (corps de vanne 20), la liaison pivot 28 étant montée avec un jeu. Ce jeu permet une souplesse dans le positionnement du clapet 26, afin de positionner ce clapet 26 de manière optimale.

Le procédé comporte ensuite le positionnement du clapet 26 en position d'obturation, en contact direct avec le bord d'embouchure 24. Le clapet 26 ainsi positionné permet de déterminer la position finale de la liaison pivot 28.

Le procédé comporte enfin la fixation de la position de la liaison pivot 28 par rapport au support de clapet (corps de vanne 20), compte tenu du positionnement du clapet 26 en position d'obturation. La position de la liaison pivot 28 ainsi fixée permet d'assurer que le clapet 26 en position d'obturation sera en contact plan/plan contre le bord d'embouchure 24.

Le reste du dispositif 10 est ensuite assemblé, autour du tube 22 et du corps de vanne 20.

On notera que le tube 22 a une fonction structurelle de support dans le dispositif 10, puisque le corps de vanne 20 et le conduit intermédiaire 40 sont montés dessus.

On notera que l'invention n'est pas limitée au mode de réalisation précédemment décrit, et pourrait présenter diverses variantes complémentaires.

En particulier, la forme générale du dispositif 10 pourrait différer de celle représentée sur les figures.

## Revendications

1. Dispositif (10) de récupération de chaleur à l'échappement, s'étendant entre une entrée (16) et une sortie (18) de gaz d'échappement, et comportant :
- une vanne (12) délimitant un passage de gaz direct (19) entre l'entrée (16) et la sortie (18) de gaz d'échappement, la vanne (12) comprenant un corps de vanne (20) comportant la sortie de gaz (18) et logeant un clapet (26) mobile autour d'une liaison pivot (28) entre une position d'obturation et une position de libération du passage (19), et
- un échangeur thermique (14) comprenant une entrée d'échangeur (36) communiquant avec la vanne (12) en amont du clapet (26), et une sortie d'échangeur (38) communiquant avec la vanne (12) en aval du clapet (26),
- la vanne (12) comportant un tube (22) comprenant l'entrée de gaz d'échappement (16), le tube (22) s'étendant en partie à l'intérieur du corps de vanne (20), jusqu'à un bord d'embouchure (24) d'extrémité distale, ledit bord d'embouchure (24) s'étendant dans un plan,
**caractérisé en ce que**
- le clapet (26) présente une surface de contact plane (30), destinée à entrer en contact direct avec ledit bord d'embouchure (24) du tube (22) lorsque le clapet (26) est en position d'obturation,
- le dispositif de récupération (10) comporte un conduit intermédiaire (40) s'étendant entre le tube (22) et l'échangeur thermique (14),
- le dispositif de récupération (10) comporte, en entrée du conduit intermédiaire (40), un déflecteur amont (42) propre à guider le gaz provenant de l'entrée de gaz (16) vers le passage (19),
- le déflecteur amont (42) est formé par une partie du conduit intermédiaire (40), s'étendant dans le tube (22), et
- le dispositif de récupération (10) comprend un déflecteur aval (44), agencé dans le tube (22) en aval de l'entrée du conduit intermédiaire (40), et dans lequel le déflecteur amont (42) s'avance dans le tube (22) sur une hauteur supérieure à celle du déflecteur aval (44).

2. Dispositif de récupération (10) selon la revendication 1, dans lequel le tube (22) s'étend le long d'un axe longitudinal (X), le bord d'embouchure (24) s'étendant dans un plan formant un angle compris entre 60° et 90° avec l'axe longitudinal (X), par exemple un angle égal à 60° ou égal à 90°.

3. Dispositif de récupération (10) selon l'une quelconque des revendications précédentes, dans lequel le tube (22) présente une section transversale oblongue.

4. Dispositif de récupération (10) selon l'une quelconque des revendications précédentes, dans lequel la liaison pivot (28) portant le clapet (26) est formée par deux demi-articulations (28A, 28B) alignées, disposées de part et d'autre du tube (22), la liaison pivot (28) présentant un axe (R) passant par le tube (22).

5. Dispositif de récupération (10) selon l'une quelconque des revendications précédentes, dans lequel le clapet (26) comporte un tricot métallique (32), destiné à venir en contact avec le bord d'embouchure (24) du tube (22).

6. Dispositif de récupération (10) selon l'une quelconque des revendications précédentes, dans lequel le clapet (26) comporte une masselotte (34).

7. Dispositif de récupération (10) selon la revendication 6, dans lequel la masselotte (34) est conformée pour obstruer la sortie d'échangeur (38) lorsque le clapet (26) est en position de libération, la sortie d'échangeur (38) étant de préférence munie d'une bague ajustée réduisant l'espace disponible au gaz à la sortie d'échangeur (38) lorsque le clapet (26) est en position de libération.

8. Dispositif de récupération (10) selon la revendication 7, dans lequel la masselotte (34) présente une forme recourbée, conformée pour obstruer la sortie d'échangeur (38) lorsque le clapet (26) est dans une position intermédiaire prédéfinie entre la position d'obturation et la position de libération.

9. Procédé de fabrication d'un dispositif de récupération (10) selon l'une quelconque des revendications précédentes, **caractérisé en ce qu'**il comporte :
- la fourniture du tube (22),
- le montage d'un support de clapet (20) sur le tube (22),
- l'assemblage du clapet (26) sur le support de clapet (20), la liaison pivot (28) étant montée avec un jeu,
- le positionnement du clapet (26) en position d'obturation, en contact direct avec le bord d'embouchure (24), et
- la fixation de la position de la liaison pivot (28) par rapport au support de clapet (20), compte tenu du positionnement du clapet (26) en position d'obturation.

## Patentansprüche

1. Vorrichtung (10) zur Rückgewinnung von Abgaswärme, welche sich zwischen einem Einlass (16) und einem Auslass (18) für Abgas erstreckt und aufweist:
- ein Ventil (12), welches einen direkten Gasdurchgang (19) zwischen dem Einlass (16) und dem Auslass (18) begrenzt, wobei das Ventil (12) einen Ventilkörper (20) aufweist, welcher den Gasauslass (18) aufweist und eine Klappe (26) aufnimmt, welche um eine Schwenkverbindung (18) herum zwischen einer Verschlussposition und einer Freigabeposition des Durchgangs (19) bewegbar ist, und
- einen Wärmetauscher (14), welcher einen Tauschereingang (36), welcher mit dem Ventil (12) stromaufwärts der Klappe (26) in Verbindung steht, und einen Tauscherausgang (38), welcher mit dem Ventil (12) stromabwärts der Klappe (26) in Verbindung steht, aufweist,
- wobei das Ventil (12) ein Rohr (22) aufweist, welches den Abgaseinlass (16) aufweist, wobei sich das Rohr (22) teilweise im Inneren des Ventilkörpers (20) bis zu einem Mündungsrand (24) des distalen Endes erstreckt, wobei der Mündungsrand (24) sich in einer Ebene erstreckt,
**gekennzeichnet dadurch, dass**
- die Klappe (26) eine ebene Kontaktfläche (30) aufweist, welche dazu bestimmt ist, mit dem Mündungsrand (24) des Rohrs (22) in Kontakt zu treten, wenn die Klappe (26) in der Verschlussposition ist,
- die Vorrichtung zur Rückgewinnung (10) einen Zwischenkanal (40) aufweist, welcher sich zwischen dem Rohr (22) und dem Wärmetauscher (14) erstreckt,
- die Vorrichtung zur Rückgewinnung (10) am Eingang des Zwischenkanals (40) eine stromaufwärtige Ablenkeinrichtung (42) aufweist, welche dazu geeignet ist, das von dem Gaseinlass (16) kommende Gas hin zum Durchgang (19) zu leiten,
- die stromaufwärtige Ablenkeinrichtung (42) durch einen Abschnitt des Zwischenkanals (40) gebildet ist, welcher sich in das Rohr (22) erstreckt, und
- die Vorrichtung zur Rückgewinnung (10) eine stromabwärtige Ablenkeinrichtung (44) aufweist, welche in dem Rohr (22) stromabwärts des Eingangs des Zwischenkanals (40) angeordnet ist, und wobei die stromaufwärtige Ablenkeinrichtung (42) in das Rohr (22) um eine Höhe vorsteht, welche größer ist als jene der stromabwärtigen Ablenkeinrichtung (44).

2. Vorrichtung zur Rückgewinnung (10) gemäß dem Anspruch 1, wobei das Rohr (22) sich entlang einer Längsachse (X) erstreckt, wobei sich der Mündungsrand (24) in einer Ebene erstreckt, welche einen Winkel zwischen 60° und 90°, beispielsweise einen Winkel gleich 60° oder gleich 90°, mit der Längsachse (X) bildet.

3. Vorrichtung zur Rückgewinnung (10) gemäß einem der vorhergehenden Ansprüche, wobei das Rohr (22) einen länglichen Querschnitt aufweist.

4. Vorrichtung zur Rückgewinnung (10) gemäß einem der vorhergehenden Ansprüche, wobei die die Klappe (26) tragende Schwenkverbindung (28) durch zwei ausgerichtete Gelenkhälften (28A, 28B) ausgebildet ist, welche beidseits des Rohrs (22) angeordnet sind, wobei die Schwenkverbindung (28) eine Achse (R), welche durch das Rohr (22) verläuft, aufweist.

5. Vorrichtung zur Rückgewinnung (10) gemäß einem der vorhergehenden Ansprüche, wobei die Klappe (26) ein Metallgeflecht (32) aufweist, welches dazu bestimmt ist, in Kontakt mit dem Mündungsrand (24) des Rohrs (22) zu kommen.

6. Vorrichtung zur Rückgewinnung (10) gemäß einem der vorhergehenden Ansprüche, wobei die Klappe (26) ein Ausgleichsgewicht (34) aufweist.

7. Vorrichtung zur Rückgewinnung (10) gemäß Anspruch 6, wobei das Ausgleichsgewicht (34) dazu ausgestaltet ist, den Tauscherausgang (38) zu verschließen, wenn die Klappe (26) in der Freigabeposition ist, wobei der Tauscherausgang (38) vorzugsweise mit einem angepassten Ring versehen ist, welche den für das Gas verfügbaren Raum am Tauscherausgang (38) reduziert, wenn die Klappe (26) in der Freigabeposition ist.

8. Vorrichtung zur Rückgewinnung (10) gemäß Anspruch 7, wobei das Ausgleichsgewicht (34) aufweist eine gebogene Gestalt, welche dazu ausgestaltet ist, den Tauscherausgang (38) zu verschließen, wenn die Klappe (26) in einer vordefinierten Zwischenposition zwischen dem Verschlussposition und der Freigabeposition ist.

9. Verfahren zur Herstellung einer Vorrichtung zur Rückgewinnung (10) gemäß einem der vorhergehenden Ansprüche, **gekennzeichnet dadurch, dass** es aufweist:
- das Bereitstellen des Rohrs (22),
- das Montieren einer Klappenabstützung (20) an dem Rohr (22),
- das Anbringen der Klappe (26) an der Klappenabstützung (20), wobei die Schwenkverbindung (28) mit einem Spiel montiert wird,
- das Positionieren der Klappe (26) in die Verschlussposition, im direkten Kontakt mit dem Mündungsrand (24), und
- das Fixieren der Position der Schwenkverbindung (28) bezüglich der Klappenabstützung (20) auf Grundlage der Positionierung der Klappe (26) in die Verschlussposition.

## Claims

1. A device (10) for recovering exhaust heat, extending between an exhaust gas inlet (16) and a gas outlet (18), and including:
- a valve (12) defining a direct gas passage (19) between the exhaust gas inlet (16) and the gas outlet (18), the valve (12) comprising a valve body (20) including the gas outlet (18) and housing a gate (26) movable around a pivot link (28) between a closing off position and a released position of the direct gas passage (19), and
- a heat exchanger (14) comprising an exchanger inlet (36) communicating with the valve (12) upstream from the gate (26), and an exchanger outlet (38) communicating with the valve (12) downstream from the gate (26),
- the valve (12) including a tube (22) comprising the exhaust gas inlet (16), the tube (22) extending partially inside the valve body (20), up to a distal end mouth edge (24), said mouth edge (24) extending in a plane,
**characterized in that**
- the gate (26) has a planar contact surface (30), intended to come into direct contact with said mouth edge (24) of the tube (22) when the gate (26) is in the closing off position,
- the recovery device (10) includes an intermediate pipe (40) extending between the tube (22) and the heat exchanger (14),
- the recovery device (10) includes, at the inlet of the intermediate pipe (40), an upstream deflector (42) able to guide the gas coming from the exhaust gas inlet (16) toward the direct gas passage (19),
- the upstream deflector (42) is formed by a part of the intermediate pipe (40), extending in the tube (22), and
- the recovery device comprises a downstream deflector (44), arranged in the tube (22) downstream from the inlet of the intermediate pipe (40), and in which the upstream deflector (42) advances in the tube (22) over a height greater than that of the downstream deflector (44).

2. The recovery device (10) according to claim 1, wherein the tube (22) extends along a longitudinal axis (X), the mouth edge (24) extending in a plane forming an angle comprised between 60° and 90° with the longitudinal axis (X), for example an angle equal to 60° or equal to 90°.

3. The recovery device (10) according to any of preceding claims, wherein the tube (22) has an oblong cross-section.

4. The recovery device (10) according to any of preceding claims, wherein the pivot link (28) bearing the gate (26) is formed by two aligned half-articulations (28A, 28B), arranged on either side of the tube (22), the pivot link (28) having an axis (R) passing through the tube (22).

5. The recovery device (10) according to any of any of preceding claims, wherein the gate (26) includes a metal rib (32), intended to come into contact with the mouth edge (24) of the tube (22).

6. The recovery device (10) according to any of preceding claims, wherein the gate (26) includes a riser (34).

7. The recovery device (10) according to claim 6, wherein the riser (34) is configured to obstruct the exchanger outlet (38) when the gate (26) is in the released position, the exchanger outlet (38) preferably being provided with an adjusted ring reducing the space available for the gas at the outlet of the exchanger (38) when the gate (26) is in the released position.

8. The recovery device (10) according to claim 7, wherein the riser (34) has a curved shape, configured to obstruct the exchanger outlet (38) when the gate (26) is in a predefined intermediate position between the closing off position and the released position.

9. A method for manufacturing a recovery device (10) according to any of preceding claims, **characterized in that** it includes:
- providing the tube (22),
- mounting a gate support (20) on the tube (22),
- assembling the gate (26) on the gate support (20), the pivot link (28) being mounted with play,
- positioning the gate (26) in the closing off position, in direct contact with the mouth edge (24), and
- setting the position of the pivot link (28) relative to the gate support (20), in light of the positioning of the gate (26) in the closing off position.
